# EUROPÄISCHE PATENTANMELDUNG

(11) **EP 0 740 918 A1**
(43) Veröffentlichungstag der Anmeldung: **06.11.1996**
(21) Anmeldenummer: 96810269.9
(22) Anmeldetag: 29.04.1996
(51) Int. Cl.: A47B 96/06, F16B 12/32, F16B 12/10

(54) **Verbindungssystem für Regalzusatzausrüstungen**

(30) Priorität: 02.05.1995 CH 1245/95
(71) Anmelder: Pfister, Markus, 4419 Lupsingen (CH)
(72) Erfinder: Pfister, Markus, 4419 Lupsingen (DE); Felber, Bruno, 6285 Hitzkirch (DE)
(74) Vertreter: Braun, André, jr.

(57) **Zusammenfassung**

Das Verbindungssystem für Zubehörteile in der Regaltechnik enthält einen kastenförmigen Träger (1) mit mindestens einer Nut (4), in welche der Kamm (7) eines Verbindungselement (6) eingesteckt oder seitwärts eingeschoben werden kann. Man erhält damit je nach Bedarf ein starres oder bewegliches torsionsstabiles Verbindungssystem, welches ohne Anschweissen oder Verschrauben von Verbindungsteilen auskommt und sich insbesondere zur Verwendung für Tiefenauflagen, Fasshalter, Rückwänden von Regalen und Rollenbahnen bei Durchlaufregalen eignet.

## Beschreibung

Die Erfindung betrifft ein Verbindungssystem für Regalzusatzausrüstungen, wie es im Patentanspruch 1 beschrieben ist.

In den heutzutage verwendeten Verbindungssystemen von Zusatzausrüstungen mit Regalrahmen werden üblicherweise auf Trägern aufgeschweisste Verbindungslaschen oder in Träger gebohrte Löcher verwendet, wobei die Befestigung der einzelnen Verbindungssysteme an den Regalen jeweils mittels Schweissen, Bohrschrauben und Klemmsystemen für C- und I-Profile erfolgt.

Nachteilig bei diesen Systemen sind z.B. die grosse Zahl an benötigten Einzelteilen, die durch die benötigten Bohrungen unflexible Art des Verbindens der Einzelteile miteinander, die durch die Bohrungen und üblicherweise verwendeten C- oder I-Profile geringe Torsionsstabilität der Träger und der durch das Verlieren von Bohrschrauben auftretende Verlust an Stabilität des gesamten Regals. Ferner werden in der Regel unterschiedliche Verbindungssysteme für horizontal und vertikal angreifende resp. starre und flexible Verbindungsysteme gebraucht.

Mit dem erfindungsgemässen Verbindungssystem lassen sich die obigen Nachteile vermeiden. Insbesondere geeignet ist das System für Verbindungen auf horizontalen mit einem Ständerrahmen verbundenen Träger.

Das erfindungsgemässe Verbindungssystem ist dadurch gekennzeichnet, dass es mindestens einen Träger mit Kastenprofil und mindestens ein Verbindungselement enthält, welches mittels Steckverbindung am Träger befestigt ist.

Das erfindungsgemässe Verbindungssystem ist insbesondere dadurch gekennzeichnet, dass es mindestens einen Träger mit Kastenprofil mit mindestens einer mindestens in einem Teilbereich einer Längsachse entlang laufenden im Querschnitt rechtwinklig zur Längsachse annähernd ausgerundeten Nut und/oder mindestens einem mindestens in einem Teilbereich einer Längsachse entlang laufenden im Querschnitt rechtwinklig zur Längsachse annähernd abgerundeten Kamm und als Gegenstück ein darin resp. darauf einschiebbares resp. aufschiebbares oder einsteckbares resp. aufsteckbares Verbindungselement mit einem mindestens in einem Teilbereich der Verbindungsachse entlang laufenden im Querschnitt rechtwinklig zur Verbindungsachse annähernd abgerundeten Kamm resp. mit einer mindestens in einem Teilbereich der Verbindungsachse entlang laufenden im Querschnitt rechtwinklig zur Verbindungsachse annähernd abgerundeten Nut aufweist.

Insbesondere eignet sich das erfindungsgemässe Verbindungssystem für die horizontale Montage von Zusatzausrüstungen auf Horizontalträgern in Regalen, z.B. für Tiefenauflagen, Rollenbahnen für Palettenregale resp. Durchlaufregale, doch kann es auch vertikal z.B. für das Fixieren von Rückwänden in Regallagern verwendet werden. Ferner kann es mit Coilauflagen, Containerauflagen, Fachböden etc. auch für andere Formen der Lagerung verwendet werden.

Durch das geschlossene Kastenprofil des Trägers wird eine im Verhältnis zu den bisher verwendeten C- und I-Profilen hervorragende Torsionssteifigkeit und dank den Materialanhäufungen durch den ausgeformten Kamm oder die Nut und gegebenenfalls überlappende Formteile im Zug- und Druckgurt-Bereich, welcher sich im Bereich der beiden horizontal angeordneten Flächen des kastenförmigen Trägers befindet, werden ausgezeichnete statische Querschnittswerte erreicht.

Da der Träger im Kaltwalzverfahren hergestellt werden kann, ermöglicht dies den Einsatz hochlegierter/hochfester Stähle, ferner kann das Kastenprofil des Trägers durch geringe Umstellungen an der Profilmaschine z.B. in Bezug auf die Bauhöhe angepasst resp. modifiziert werden.

Durch die am Träger ausgeformten Nuten und/oder Kämme wird das Aufschweissen von herkömmlich verwendeten Befestigungslaschen oder das Bohren oder Stanzen von Löchern für vorgesehene Zusatzausrüstungen überflüssig. Durch Wegfall der für das präzise Aufschweissen oder Stanzen erforderlichen Fertigungstoleranzen und des Anfertigens von Schweiss- oder Bohrlehren wird die Produktion der Träger vereinfacht und die Produktionskosten gesenkt.

Schweissverbindungen haben weitere Nachteile. Da es damit durch die Wärmeeinbringung immer zu Materialverzug kommt, wirkt sich dies gegen die heutzutage erforderlichen engen Toleranzen bei Regalkonstruktionen aus.

Durch Fehlen von Schweissverbindungen und Bohrungen oder Stanzungen kann der erfindungsgemässe Träger auch aus vorvezinktem Material gefertigt werden, so dass eine nachträgliche Oberflächenbehandlung entfallen kann.

Ferner erweist sich der Wegfall von vorgängig auf den Träger aufzuschweissenden Verbindungselementen oder Bohren oder Stanzen von Löchern als Grundlage für das flexible Aufbringen auch noch von nachträglich montierten Zusatzausrüstungen.

Das Verbindungselement weist im Falle einer Verbindung mit einer Nut am Träger mindestens einen abgerundeten Kamm auf, der in die ausgerundete Nut entweder von oben eingesteckt oder seitwärts eingeschoben werden kann. Im Falle einer gewünschten Verbindung mit einer Nut am Träger muss das Verbindungselement hingegen eine entsprechende augerundete Nut aufweisen, die über den abgerundeten Kamm gestülpt resp. seitwärts eingeschoben werden kann.

Die so entstandene Verbindung zwischen Träger und Verbindungselement kann sowohl starr als auch flexibel sein. Eine starke Klemmwirkung zwischen Träger und Verbindungselement erhöht zwar die Starrheit der Verbindung, doch wird eine starre Verbindung insbesondere dann erreicht, wenn das Verbindungselement sich mit oder ohne zusätzlicher Distanzstücke auf der horizontalen Oberfläche des Trägers abstützt.

Das Verbindungselement kann zudem eine Platte aufweisen, auf welche die Zusatzausrüstungen frei oder verschraubt zu liegen kommen, es kann aber auch selber als beliebige Zusatzausrüstung ausgeformt sein, welche über die angeformte, angeschweisste oder angeschraubte Nut oder den Kamm mit einem Träger verbunden werden kann.

Das erfindungsgemässe Verbindungssystem ist im Gegensatz zu herkömmlichen Verbindungstechniken montagefreundlich und rationell verwendbar, weil es aus wenigen Einzelteilen besteht und durch den Wegfall von Schrauben, Bolzen etc. auch in grossen Höhen von mehr als 20 m noch einfach montiert werden kann. Überdies bringen die optimierten Eigenschaften des Verbindungssystems erhebliche Material- und Gewichtseinsparungen und Wartungsvereinfachungen mit sich, was bei gegenüber dem Stand der Technik verbesserten Betriebseigenschaften sowohl Produktions- als auch Montage- und Wartungskosten senkt.

Das erfindungsgemässe Verbindungssystem ist ferner insbesondere für Rollenbahnen bei Durchlaufregalen geeignet. Die Bahnen weisen üblicherweise ein geringes Gefälle von etwa 4% auf, so dass die gelagerten Paletten o.ä. durch die Schwerkraft entlang des Gefälles in Bewegung gesetzt werden. Als die Rollenbahnrahmen tragende Traversen werden erfindungsgemässe Träger eingesetzt. Zwei Rollenbahnrahmen stossen auf der horizontalen Platte eines erfindungsgemässen Verbindungselements aneinander. Die Positionierung der Verbindungselemente kann seitwärts leicht den Rollenbahnrahmen angepasst werden, da die Verbindungselemente entlang der Längsachse der Träger frei verschiebbar sind, und das gewünschte Gefälle der Rollenbahn lässt sich durch das Spiel im Lagersitz zwischen Träger und Verbindungselement leicht einstellen. Das Lagerspiel eliminiert zudem einen möglichen Verzug der Rollenbahnrahmen durch die gegebenen Herstell- und Montagetoleranzen der Regalkonstruktion, der ein Verlaufen der Paletten bewirken würde.

Im folgenden wird die Erfindung anhand von Zeichnungen näher erläutert.
Dabei zeigen Fig.1, Fig.2 und Fig.3 drei verschiedene Ausführungsarten eines erfindungsgemässen Verbindungssystems mit Träger und Verbindungselement;
Fig.4 a-h zeigt verschiedene mögliche Varianten eines erfindungsgemässen Trägers;
Fig.5 zeigt ein erfindungsgemässes Verbindungsystem für eine Rollenlaufbahn mit Gefälle; und
Fig.6 zeigt ein erfindungsgemässes Verbindungsystem mit verschiedenen Zusatzausrüstungen.

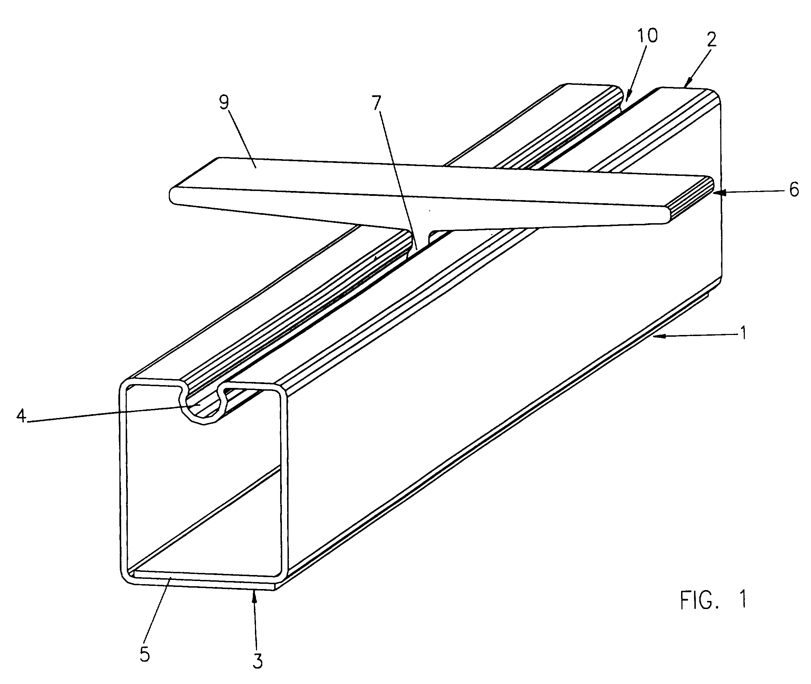

In Fig.1 wird ein kaltgewalzter Träger (1) mit Kastenprofil gezeigt. Im Zug- und Druckgurtbereich (2,3) weist der Träger (1) Materialanhäufungen an, einerseits durch die ausgerundete Nut (4) und andererseits durch die gegebenenfalls verschweisste Überlappung von Trägermaterial (5). Die Nut (4) erstreckt sich hier über die gesamte Längsachse des Trägers (1). Rechtwinklig zur Längsachse des Trägers (1) betrachtet weist sie einen rundlichen Querschnitt mit einer leichten Einschnürung an ihrem offenen Ende auf.
In die ausgerundete Nut ist ein Verbindungselement (6) eingesteckt. Das Verbindungselement (6) besteht aus einem abgerundeten Kamm (7) und einer annähernd rechtwinklig zum Kamm (7) angeordneten Platte (9), die Zusatzausrüstungen, wie z.B. Rollenbahnrahmen, zur Abstützung dienen kann. Beim Einstecken des Verbindungselements (6) in die Nut (4) wird die Einstecköffnung (10) in geringem Ausmass auseinandergepresst, so dass das Verbindungselement (6) hernach nicht mehr ohne weiteres zu entfernen ist. Die leichte Einschnürung verhindert das Rausrutschen des Verbindungselements (6) aus der Nut (4). Nach erfolgtem Zusammenfügen ist ein Verschieben des Verbindungselements (6) rechtwinklig zur Längsachse des Trägers (1) verunmöglicht. Hingegen kann die Neigung des Verbindungselements (6) nach Belieben eingestellt oder beweglich gelassen werden. Durch nicht gezeichnete Distanzscheiben o.ä. zwischen Träger (1) und Platte (9) kann das Verbindungselements (6) starr und unbeweglich angeordnet werden. Das Verschieben des Verbindungselements (6) in Längsrichtung des Trägers (1) kann mittels Einlegen von in der Fig. nicht gezeigten geeigneten Clips, z.B. aus Federstahl, oder Distanzprofilen in der Nut (4) (z.B. Rohre) oder einer Stellschraube verhindert werden.

Das Verbindungselement (6) kann aus einem Metallgussteil bestehen, doch ist auch ein Kunststoffteil mit elastischer oder unelastischer Platte (9) denkbar. Ferner kann man das Verbindungselements (6) gegebenenfalls auch von der Seite in die Nut (4) des Trägers (1) einschieben. Dies wird immer dann nötig sein, wenn die Einstecköffnung (10) zu eng für den Kamm (7) ist oder das für den Träger (1) verwendete Material so strr ist, dass es beim Einstecken des Verbindungselementes (6) nicht genügend nachgibt.

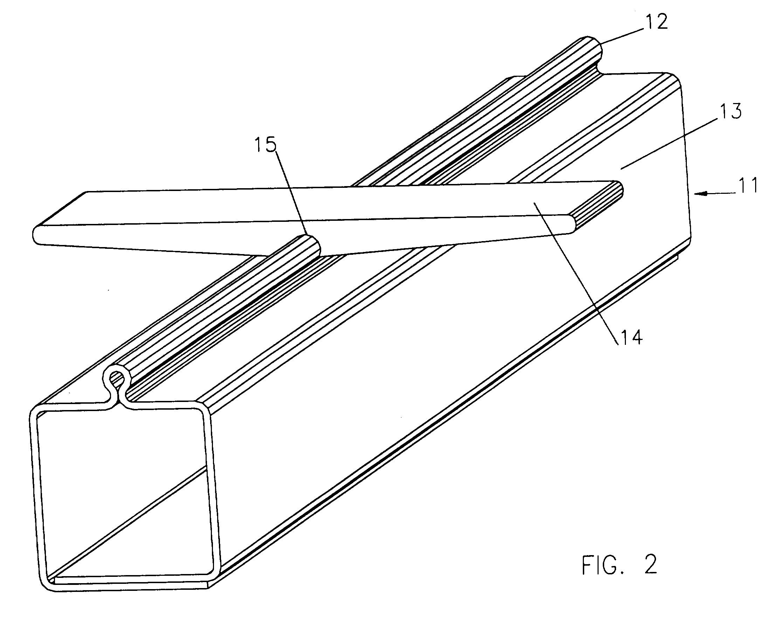

In Fig.2 wird ein erfindungsgemässes Verbindungssystem gezeigt, das eigentlich einer Umkehrung der in Fig.1 gezeigten Anordnung entspricht. Der Träger (11) mit Kastenprofil weist hier mindestens in einem Teilbereich seiner Längsachse einen kaltgewalzten abgerundeten Kamm (12) auf, auf den das Verbindungselement (13) aufgesteckt ist. Das Verbindungselement (13) besteht aus einer Platte (14), die eine ausgerundete Nut (15) aufweist, welche den Kamm (12) teilweise annähernd formschlüssig umfasst. Das Verbindungselement (13) kann starr oder beweglich gelagert sein. Besteht ein lichter Abstand zwischen der Unterseite der Platte (14) und der Oberfläche des Trägers (11), ist das Verbindungselement (13) in der Regel beweglich gelagert, sofern nicht in der Fig. nicht gezeichnete Distanzstücke zwischen den beiden genannten Flächen angeordnet sind.

Das Montieren des Verbindungselements (13) hängt stark von dessen Eigenstabilität und dem Verwendungszweck ab. Falls die geringe Eigenstabilität des Verbindungselements (13) (die es zum Aufstecken benötigt) seine Funktionstüchtigkeit nicht beeinträchtigt, kann es auf den rohrartigen Vorsprung (12) aufgesteckt werden. Andernfalls ist ein Aufschieben von der Seite, d.h. in der Längsachse des Trägers (11), unerlässlich. Falls dem Träger (11) Einhängeklauen o.ä. angeschweisst werden, ist das Verbindungselement (13) entweder vor dem Schweissen aufzuschieben oder es wird ein genügend langes Stück des Kamms (12) abgetrennt, um das Einschieben des Verbindungselement (13) zu gewährleisten. Nach erfolgtem Zusammenfügen ist das Verschieben des Verbindungselement (13) in rechtem Winkel zur Längsachse des Trägers (11) verunmöglicht. Das Verschieben des Verbindungselements (13) in der Längsachse des Trägers (11) kann mittels Einschieben oder Aufstecken von in der Fig. nicht gezeigten Clips oder Distanzprofilen oder Stellschrauben verhindert werden.

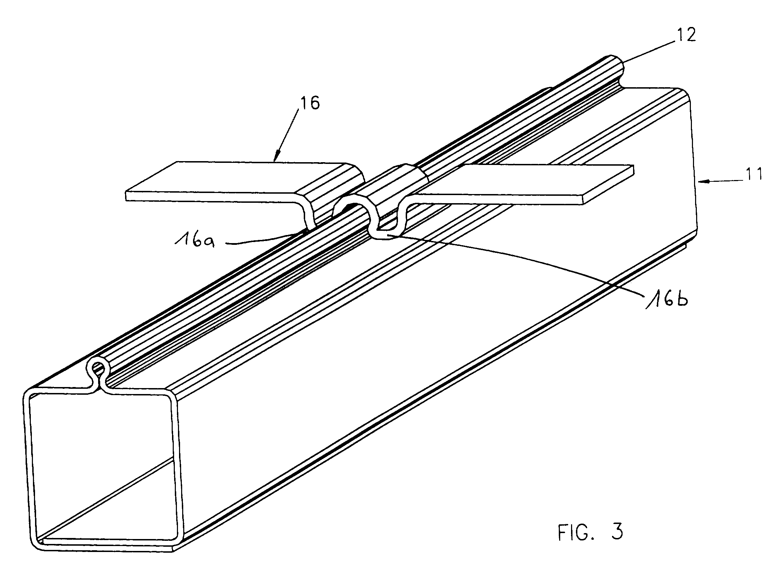

In Fig.3 wird eine Variante der in Fig.2 vorhandenen Ausführung gezeigt. Es kann dabei der gleiche Träger (11) verwendet werden, doch wird ein anderes Verbindungselement (16) benützt. Es besteht aus einem Formteil aus Metall oder Kunststoff, das auch wieder entweder von oben aufgesteckt oder seitwärts auf den abgerundeten Kamm (12) eingeschoben wird. Die Abstützung des Verbindungselement (16) auf dem Träger (11) erfolgt durch zwei Stützbereiche (16a, 16b) des Verbindungselements (16). Dadurch kann gegebenenfalls auch die starre Verbindung zwischen Träger (11) Verbindungselement (16) sichergestellt werden. Weil das für das Verbindungselement (16) verwendete Material auch in geringem Ausmass elastisch sein kann, ist es jedoch auch bei dieser Ausführungsart der Erfindung möglich, Zubehörteile, die sich auf das Verbindungselement (16) stützen, in geringem Umfang elastisch miteinander zu verbinden.

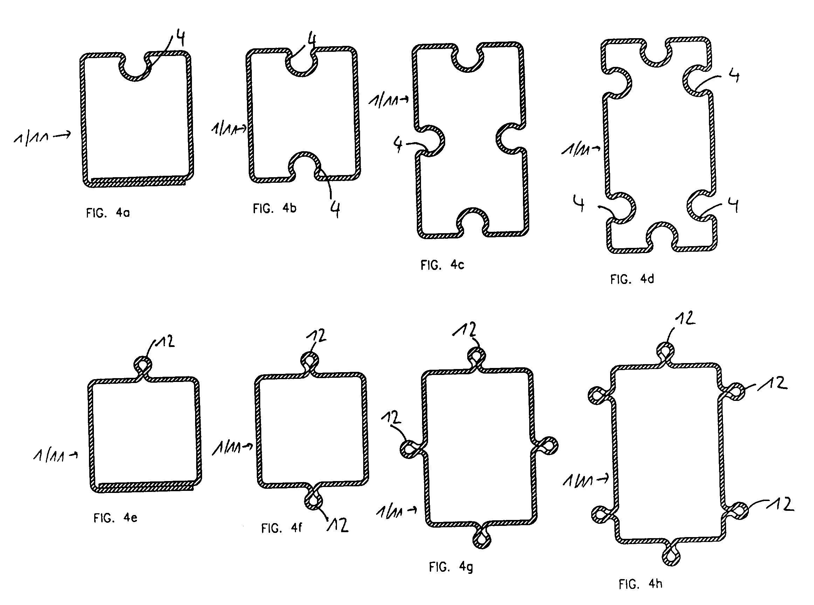

In Fig.4 a-h werden einige Möglichkeiten gezeigt, wie ein erfindungsgemässer Träger (1, 11) ausgebildet sein kann. Jeder Träger kann eine oder mehrere Nuten (4) oder einen oder mehrere Kämme (12) pro Seite aufweisen. Selbstverständlich wären auch anders geformte Nuten oder Kämme möglich, sofern man die entsprechenden Gegenstücke an den Verbindungselementen sinnvoll produzieren kann. Ebenso kann auch das Verbindungselement sehr viel verschiedene Formen aufweisen, solange die Steckverbindung resp. das Einschieben auf den Träger gewährleistet bleibt.

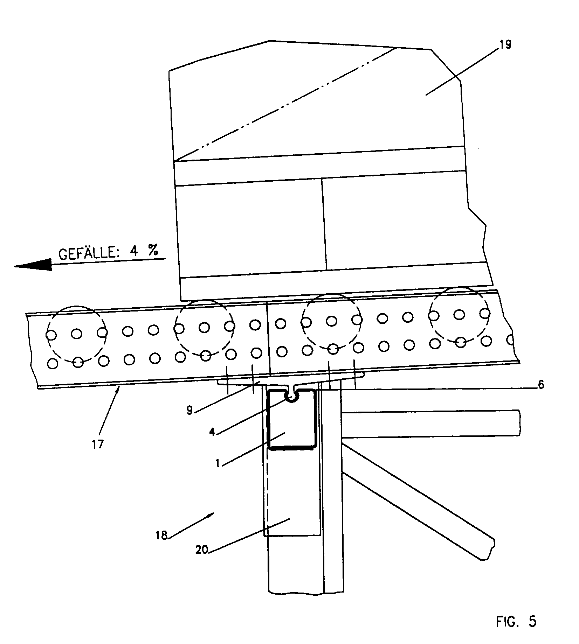

In Fig.5 wird ein Teil eines Rollenbahnrahmens (17) eines Durchlaufregals (18) für z.B. Paletten (19) gezeigt. Dabei wird der kastenprofilförmige Träger (1) auf herkömmliche Art am Regalrahmen (20) befestigt. In die Nut (4) des Trägers (1) wird das Verbindungselement (6) eingesteckt. Zwei Rahmenenden zweier Rollenbahnteile (17) werden auf der Platte (9) abgestützt. Die Rahmenenden (17) brauchen dabei auf der Platte (9) nicht festgeschraubt zu werden und die Neigung der Platte zur Horizontalen ist flexibel. Durch den Wegfall von angeschweissten geneigten Befestigungsplatten wird die nachträgliche Richtarbeit zum Einhalten der gewünschten Neigung der Platten vermieden. Durch den Wegfall des herkömmlichen Anschraubens des Rahmens an den Befestigungsplatten wird ein Verspannen der die Rollenbahnen tragenden Rahmen vermieden, so dass ein sanfter Übergang eines Stückgutes von einem Rahmen zum andern gewährleistet ist und Schläge auf die Rollenbahnen vermieden werden. Die Neigung des beweglich gelagerten Verbindungselements (6) stellt sich dabei durch das Befestigen des Trägers (1) auf entsprechender Höhe des Regalrahmens auf ein Gefälle der Rollenbahnen von in diesem Fall z.B. 4% ein, so dass zwei hintereinander angeordnete Rollenbahnrahmenenden (17) auf der Platte (9) unverspannt aneinander anstossen und etwa das gleiche Gefälle aufweisen. Dies wiederum bewirkt, dass das Stückgut, z.B. Paletten (19), geräuschlos, erschütterungsfrei und ohne am Rahmenende anzuhängen über die einzelnen Rollenbahnteile laufen können.

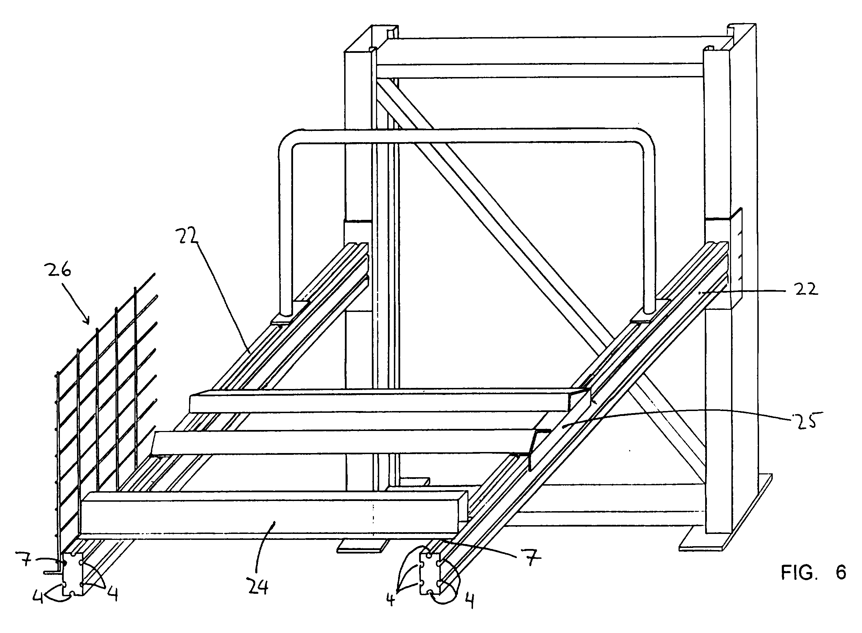

In Fig.6 wird ein erfindungsgemässes Verbindungssystem für verschiedene Zusatzausrüstungen in einem Regal gezeigt. Dabei werden z.B. zur Lagerung von Paletten auf 2 Horizontalträgern (22) mit mehreren ausgerundeten Nuten (4) eine beliebige Anzahl rechtwinklig dazu angeordnete Verbindungselemente (24) eingesteckt, die an beiden Enden je einen geeigneten abgerundeten Kamm (7) oder mindestens ein in der Zeichnung nicht gezeigtes in die Nut (4) passendes Zäpfchen aufweisen.

Analog kann das erfindungsgemässe Verbindungssysteme mit Horizontalträgern (22) auch z.B. als Fasshalter (25) ausgebildete Verbindungselemente mit jeweils an beiden Enden abgerundeten Kämmen (7) oder mindestens einem in der Zeichnung nicht gezeigten passenden Zäpfchen zum Einstecken in die Nuten (4) der Horizontalträger (22) darstellen. Auch Rückwände (26) für Regale oder Mittelwände für Doppelregale lassen sich analog darstellen, wenn die Rückwände (26) Kämme (7) oder mindestens 2 in der Zeichnung nicht dargestellte Zäpfchen aufweisen, welche in den vertikal angeordneten Nuten (4) der entsprechenden Horizontalträger (22) fixiert werden können.

## Patentansprüche

1. Verbindungssystem für Regalzusatzausrüstungen, dadurch gekennzeichnet, dass es mindestens einen Träger mit Kastenprofil und mindestens ein Verbindungselement enthält, welches mittels Steckverbindung am Träger befestigt ist.

2. Verbindungssystem nach Patentanspruch 1, dadurch gekennzeichnet, dass es mindestens einen Träger mit Kastenprofil mit mindestens einer mindestens in einem Teilbereich einer Längsachse entlang laufenden im Querschnitt rechtwinklig zur Längsachse annähernd ausgerundeten Nut und/oder mit mindestens einem mindestens in einem Teilbereich einer Längsachse entlang laufenden im Querschnitt rechtwinklig zur Längsachse annähernd abgerundeten Kamm und als Gegenstück ein darin resp. darauf einschiebbares resp. aufschiebbares oder einsteckbares resp. aufsteckbares Verbindungselement mit einem mindestens in einem Teilbereich der Verbindungsachse entlang laufenden im Querschnitt rechtwinklig zur Verbindungsachse annähernd abgerundeten Kamm resp. mit einer mindestens in einem Teilbereich der Verbindungsachse entlang laufenden im Querschnitt rechtwinklig zur Verbindungsachse annähernd ausgerundeten Nut enthält.

3. Verbindungssystem nach Patentanspruch 1 oder 2, dadurch gekennzeichnet, dass das Verbindungselement eine zur Abstützung von Zusatzausrüstungen geeignete Platte aufweist.

4. Verbindungssystem nach Patentanspruch 3, dadurch gekennzeichnet, dass die Platte gleichzeitig als Zusatzausrüstung für Regale ausgebildet ist.

5. Verbindungssystem nach einem der Patentansprüche 1-4, dadurch gekennzeichnet, dass der Träger und das Verbindungselement vorzugsweise durch zusätzliche Abstützung der Platte des Verbindungselements auf der Oberfläche des Trägers starr miteinander verbunden sind.

6. Verbindungssystem nach Patentanspruch 1-5, dadurch gekennzeichnet, dass der Träger und das Verbindungselement durch einen lichten Abstand zwischen der Platte des Verbindungselements und der Oberfläche des Trägers beweglich miteinander verbunden sind.

7. Verwendung eines Verbindungssystems nach einem der Patentansprüche 1-6 bei der horizontalen Montage von Zusatzausrüstungen auf Horizontalträgern in Regalen, wie z.B. für Tiefenauflagen, Rollenbahnen für Palettenregale resp. Durchlaufregale, oder bei vertikaler Montage für das Fixieren von Rückwänden in Regallagern.
